## Europäisches Patentamt
## European Patent Office
## Office européen des brevets

(19)

(11) Veröffentlichungsnummer: **0 060 908**
A1

(12) **EUROPÄISCHE PATENTANMELDUNG**

(21) Anmeldenummer: 81102151.8

(22) Anmeldetag: 23.03.81

(51) Int. Cl.³: **G 01 F 23/16**

(43) Veröffentlichungstag der Anmeldung:
29.09.82 Patentblatt 82 39

(84) Benannte Vertragsstaaten:
DE FR GB IT SE

(71) Anmelder: Ingenjörsfirman Installationsjänst AB
Ö. Arödsgatan 17 A
S-422 43 Hisings Backa(SE)

(72) Erfinder: Anderson, Stig
Näverlursgatan 4
S-421 44 V. Frölunda(SE)

(74) Vertreter: Blum, Rudolf E. et al,
c o E. Blum & Co Patentanwälte Vorderberg 11
CH-8044 Zürich(CH)

(54) Flüssigkeitsstandsmessvorrichtung für mehrere Behälter mit Auswahleinrichtung.

(57) Ein Flüssigkeitstandanzeiger weist eine Wählereinrichtung (B) auf und ist dazu bestimmt, den Flüssigkeitsstand von wenigstens zwei verschiedenen Volumen anzuzeigen. In einer Kammer (30) mit einem Anzeigerohr (41) ist eine Anzeigeflüssigkeit (45) vorhanden. Ein Luftdurchtritt (40) ist zwischen der Kammer (30) und der Wählereinrichtung angeordnet. Von der Wählereinrichtung (B) aus erstrecken sich Luftleitungen (17, 17', 17'') zu den zu messenden Flüssigkeitsleitungen, in welchen mit den Luftleitungen (17, 17', 17'') verbundene Messrohre (118, 119, 120) eingetaucht sind. Bei Betätigung eines Luftverdrängungsgliedes (22) wird die im jeweiligen Messrohr (118, 119, 120) vorhandene Luftmenge aufgrund des sich in den jeweiligen Luftleitungen (17, 17', 17'') aufgebauten Druckes verdrängt. Danach wird der Druck der zu messenden Flüssigkeit zur Einwirkung auf die Kammer (30) gebracht, in der die Anzeigeflüssigkeit (45) enthalten ist. Der Pegel dieser Anzeigeflüssigkeit (45) steigt in einem den Pegel der gemessenen Flüssigkeitsmenge entsprechenden Mass. Mittels eines schwenkbaren Wählschalters (104, 122, 123) wird jeweils eine der Flüssigkeitsmengen luftdicht mit dem Flüssigkeitsanzeiger verbunden. Der Wählschalter (104, 122, 123) wirkt mit Rasten (12) zusammen, gegen welche er vorgespannt ist.

EP 0 060 908 A1

./...

Fig. 2

BEZEICHNUNG GEÄNDERT
siehe Titelseite

- 1 -

Wählereinrichtung zum Anzeigen
des Flüssigkeitsstandes

------------------------------------

Zum Anzeigen des Flüssigkeitsstandes in
einem Behälter, z.B. des Oelstandes im Kurbelgehäuse eines
Verbrennungsmotors, sind Anzeigegeräte bekannt, die durch
eine Schlauchleitung mit einem in die Flüssigkeit ragenden
Tauch- oder Messrohr verbunden sind, wobei das Anzeigegerät ein manuell betätigbares Verdrängungsglied aufweist,
das beim Betätigen eine Luftmenge aus dem Messrohr heraustreibt, die als Blasen durch die Flüssigkeit emporsteigt.
Anschliessend wird eine Verbindung zwischen der Schlauchleitung und dem Anzeigerohr des Anzeigegerätes geöffnet,
wodurch der äussere Flüssigkeitsdruck im Behälter imstande
wird, die Luftsäule im Schlauch nach oben zu verdrängen,
und diese Luftsäule treibt ihrerseits eine Anzeigeflüssigkeit in das Anzeigerohr, umso höher, je höher der anzuzeigende Flüssigkeitsstand ist.

Ein Flüssigkeitsstandsanzeiger dieser Art
ist z.B. durch die US-PS 4 072 053 bekannt und ist in erster
Linie zum Anzeigen des Oelstandes im Kurbelgehäuse eines
Verbrennungsmotors bestimmt.

Es kommt jedoch oft vor, dass ein Kraftwagen mit mehreren Oelwannen oder -behältern ausgestattet

RM/str
2.3.1981

ist, deren Flüssigkeitsstand ermittelt werden muss. So haben viele Kraftwagen ein automatisches Getriebe, das mit Oel als Arbeitsmedium arbeitet, und manche haben ferner auch einen Behälter für Hydraulöl, das in einer Hydraulanlage des Kraftwagens, z.B. für eine hydropneumatische Federung, verwendet wird.

Selbstverständlich könnte man für diese Behälter einzelne Anzeigevorrichtungen der eingangs erwähnten Art verwenden, aber mehrere Geräte nehmen entsprechend grösseren Raum in Anspruch, und ihr Einbau wird beträchtlich teurer als der Einbau eines einzelnen Gerätes, inbesondere wenn, wie meist der Fall ist, die Anzeigevorrichtung nachträglich als Zusatz montiert wird. Die anscheinend einfache Lösung, ein Anzeigegerät durch ein Mehrwegventil mit den Schlauchleitungen von den einzelnen Flüssigkeitsbehältern wahlweise in Verbindung setzen zu können, scheidet aus, weil man, um die Montage auf das Instrumentenbrett eines Kraftwagens zu ermöglichen, die Vorrichtung möglichst gedrängt bauen muss. Die in der Vorrichtung arbeitenden Luftmengen werden dabei äusserst gering, wodurch die Genauigkeit des Anzeigens durch das Einschalten eines Mehrwegventils verloren gehen würde. Die verhältnismässig grossen Abmessungen solcher Ventile verhindern auch praktisch den Einbau in das Anzeigegerät, während eine separate Unterbringung des Ventils aus technischen, ökonomischen und ästhetischen Gründen unmöglich ist.

Aufgabe der Erfindung ist daher, eine Wählereirrichtung zu erstellen, die in das Anzeigegerät eingebaut werden und nach Wunsch zwischen dem Anzeigegerät und einem jeden von wenigstens zwei verschiedenen Flüssigkeitsvolumen eine Verbindung öffnen kann unter Beibehalten voller Messgenauigkeit. Bei einer Wählereinrichtung zum Anzeigen des Standes eines jeden von zwei oder mehreren Flüssigkeitsvolumen mit Hilfe eines gemeinsamen Anzeigegerätes, das über eine Luftpassage mit der Wählereinrichtung verbunden ist, die ihrerseits durch Leitungen in Verbindung mit den Flüssigkeitsvolumen steht, wobei der jeweilige Flüssigkeitsstand dadurch angezeigt wird, dass Luft in der Leitung zwischen dem Anzeigegerät und dem entsprechenden Flüssigkeitsvolumen durch Betätigen eines Verdrängungsgliedes die Flüssigkeit aus dem Tauchrohr am unteren Ende der Leitung hinaustreibt, wonach der von der Flüssigkeit ausserhalb des Rohres ausgeübte Druck in Verbindung mit einer Kammer im Anzeigegerät, die eine Anzeigeflüssigkeit enthält, in Verbindung gesetzt wird und diese Flüssigkeit in ein Anzeigerohr zu einem dem jeweiligen Flüssigkeitsstand entsprechenden Niveau hochdrückt, wird diese Aufgabe erfindungsgemäss dadurch gelöst, dass zum Verbinden einer ausgewählten der Leitungen von den Flüssigkeitsvolumen mit der Luftpassage ein Schaltglied an der Wählereinrichtung vorgesehen ist, dessen Bewegung von und zu den Einschaltlagen derart geführt ist, dass das Schaltglied nahe der Einschaltlage eine axiale Bewegung relativ zur Luftpassage erhält und in der Einschaltlage eine von Rasten und Federbelastung bestimmte dichtende Verbindung mit der Luftpassage herstellt.

Ein weiteres Merkmal der Erfindung besteht darin, dass das Schaltglied der Wählereinrichtung schwenkbar gelagert ist und dass seine axialen Bewegungen zwischen den Einstellagen mittels Vorsprüngen gesteuert sind, die die Einstellagen bestimmende Rasten trennen. Vorteilhaft werden dabei mittels schmaler biegsamer Schläuche Durchgangsöffnungen im Schaltglied, die mit der Luftpassage zum Decken gebracht werden können, mit einem Schaltstück verbunden, das seinerseits durch die Leitungen mit den Flüssigkeitsvolumen verbunden ist.

Das Schaltglied kann vorteilhafterweise aus einem am einen Ende schwenkbar gelagerten flachen Arm bestehen, dessen anderes Ende einen Stiel trägt, der in einen Griff übergeht, wobei der Stiel zwecks Eingriff mit den V-förmigen Rasten entsprechend V-förmig ausgebildet ist und unter Federbelastung steht.

Ein Ausführungsbeispiel der Wählereinrichtung gemäss der Erfindung wird anhand der Zeichnung beschrieben werden. Es zeigen:

Fig. 1a und 1b eine Oelstandsanzeigevorrichtung in Vertikalschnitt, die sich zum Ergänzen durch die Wählereinrichtung gemäss der Erfindung eignet;

Fig. 2 eine schematische Darstellung des Anzeigegerätes, der Wählereinrichtung, eines Schaltstückes, dreier Flüssigkeitsvolumen und der Schlauchverbindungen, und die

Fig. 3 und 4 in perspektivischer Darstellung die kombinierte Oelstandsanzeige-Wählervorrichtung schräg von vorne bzw. von hinten gesehen.

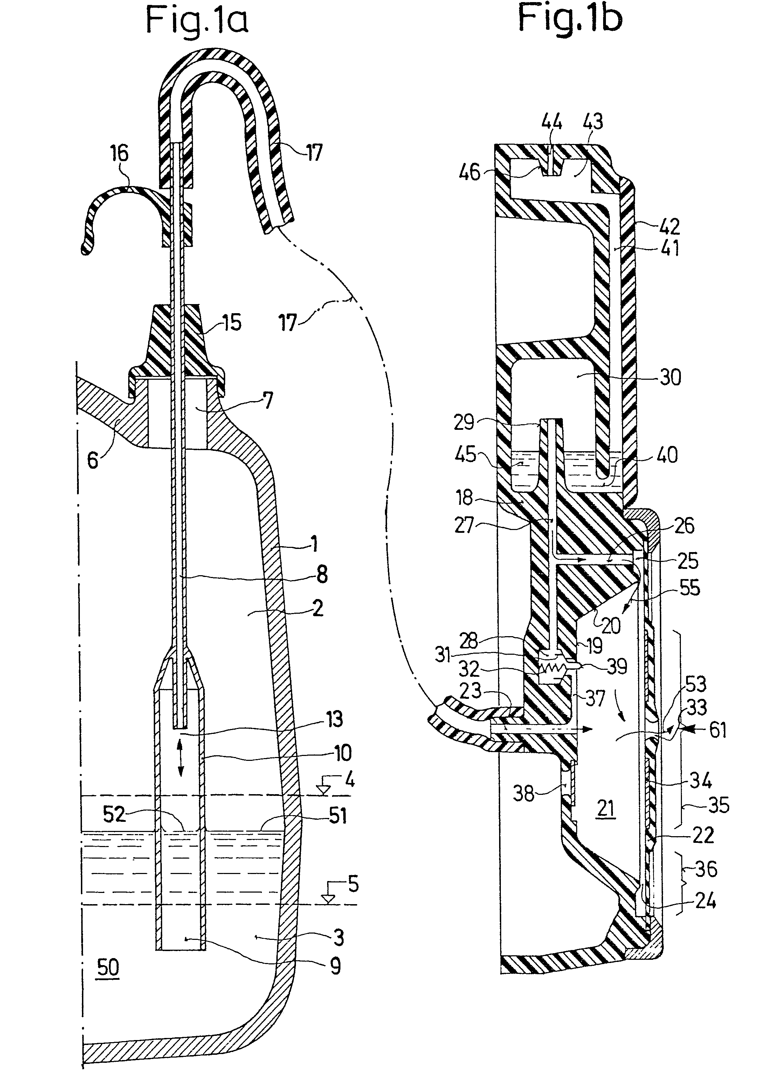

Es soll nun die in Fig. 1a, 1b dargestellte Oelstandsanzeigevorrichtung beschrieben werden.

Fig. 1a zeigt einen Teilschnitt vom Kurbelgehäuse eines Kraftwagenmotors. Die Gehäusewand 1 umschliesst eine Oelwanne 2, deren Oel 3 zwischen einem Höchststand 4 und einem niedrigsten Stand 5 schwanken darf. Im Oberteil 6 der Gehäusewand ist eine Bohrung 7 vorgesehen, durch welche ein schmales Messrohr 8 so weit herunterragt, dass sein offenes unteres Ende 9 niedriger als der niedrigste zulässliche Oelstand 5 reicht. Das Messrohr 8 ist im unteren Teil 10 zu einem solchen Durchmesser, z.B. 5 mm, erweitert, dass es durch die Bohrung 7 hindurchgeführt werden kann. Der erweiterte Rohrabschnitt 10 hat eine Länge, die so abgepasst ist, dass der zulässige Höchststand 4 des Oels nicht bis zur Oeffnung 13 reicht, die den Uebergang zwischen dem erweiterten Rohrteil 10 und dem schmalen Messrohr 8 bildet. Das letztgenannte Rohr ist vorzugsweise in den erweiterten Rohrabschnitt 10 etwas hineingeschoben. Dass Messrohr 8 ist in seiner Lage gegenüber den Oelständen 4 und 5 mit Hilfe einer einstellbaren
Stopfbüchse 15 gesichert. Mittels dieser Büchse kann das
Messrohr verschiedenen Motoren unterschiedlicher Grösse und
Herstellung angepasst werden. Am Messrohr 8 ist ein Griff
16 für sein Montieren im Kurbelgehäuse bzw. seine Wegnahme
vorgesehen.

Das Messrohr 8 steht mittels eines feinen
Schlauchs 17 mit einem Anzeigegerät in Verbindung (Fig. 1b),
das am Instrumentenbrett des Kraftwagens oder dgl. montiert
wird. Der Schlauch 17 soll einen feinstmöglichen Querschnitt
haben (etwa 1 bis 2 mm inneren Durchmesser).

Das Gehäuse 18 des Anzeigegerätes ist mit
einem Boden 19 und mit einer Wand 20 einer Kammer 21 ausgebildet, deren Deckel aus einer Membran 22 besteht. Die Kammer
21 steht mittels eines Stutzens 23 mit dem Schlauch 17 in
Verbindung, und letzterer ist mit seinem anderen Ende ans
Messrohr 8 angeschlossen. Die vorzugsweise kegelmantelförmige Kammerwand 20 begrenzt zusammen mit der Membran 22,
wenn diese nicht eingedrückt ist, eine sehr enge (etwa 1/10
mm) Ringspalte 24, die eine Verbindung zwischen der Kammer
21 und einer umgebenden Ringnut 25 darstellt. Ein Kanal 26
verbindet die Ringnut 25 mit einem Kanal 27, der unten in
einer Ventilkammer 28 und oben durch einen Stutzen 29 in
einer Flüssigkeitskammer 30 mündet. Die Ventilkammer 28 enthält ein Ventil 31, das unter Einwirkung einer Feder 32 die
Ventilkammer von der Luftkammer 21 absperrt. Die Membran 22
weist in der Mitte ein Durchgangsloch 33 auf, das die Luftkammer 21 mit der Aussenluft in Verbindung setzt. Der zentrale Teil 35 der Membran 22 ist mittels eines starren
Bleches oder dgl. 34 versteift, um Deformationen dieses
Teiles zu verhindern, während der Aussenteil 36 der Membran,
aus Gummi von kleiner Stärke bestehend, elastisch nachgiebig ist und Eindrücken der Membran gegen den Kammerboden
19 ermöglicht.

Zwischen dem Kanal 23 und der Ventilkammer 28 erstreckt sich eine offene Nut 37, die Luftströmung zwischen der Ventilkammer 28 und dem Kanal 23 ermöglicht, auch wenn die Membran zum Aufliegen auf den Kammerboden 19 eingepresst ist.

Ein Rückschlagventil 38 im Kammerboden 19 verhindert Strömung von Luft aus der Kammer 21 hinaus, wenn ein Ueberdruck in der Kammer herrscht, während es bei Unterdruck sofort öffnet und Luft hereinlässt. Das Ventil 31 ist mit einem Vorsprung 39 ausgestattet, der einige Zehntel Millimeter vom Kammerboden 19 herausragt. Dadurch wird das Ventil 31 zum Oeffnen betätigt, wenn die Membran 22 zum Aufliegen auf den Kammerboden 19 gedrückt wird.

Die Flüssigkeitkammer 30 des Gehäuses steht durch ein unten befindliches Loch 40 mit dem Anzeigerohr 41 in Verbindung, wobei dieses Rohr nach aussen von einem Sichtglas 42 begrenzt ist. Das Anzeigerohr 41 mündet oben in eine Sicherheitskammer 43, die mit der Aussenluft mittels eines Loches 44 in Verbindung steht.

Die Anzeigeflüssigkeit 45 in der Kammer 30 hat ein so bemessenes Volumen, dass sie bei Drucksteigerung in der Kammer 30 die ganze Länge des Anzeigerohres 41 erfüllen kann, ohne dass die Luft in der Kammer 30 das Verbindungsloch 40 erreicht.

Die beiden Kanäle 27 und 44 münden in ihren Kammern 30 bzw. 43 durch in die Hohlräume hineinragende Stutzen 29 bzw. 46. Die Länge der Stutzen ist derart abgestimmt, dass die Mündungen zentral in der zugeordneten Kammer gelegen sind, wodurch die Entstehung der Leckage von Flüssigkeit während Versand und Hantierung, wenn die Lage des Gehäuses völlig unbestimmt ist, unterbunden wird.

Die Wirkungsweise der Vorrichtung soll unten beschrieben werden.

Fig. 1a und 1b zeigen den nicht betätigten Zustand der im Kraftwagen montierten Anzeigevorrichtung.

Das Oel im Kurbelgehäuse (Fig. 1a) hat einen normalen Betriebsstand 51, der etwas nach oben und unten schwankt. Die Bewegungen des Kraftwagens und des Motors machen den Oelspiegel ziemlich unruhig. Der Oelstand 52, den das Oel im Messrohr 10 einnimmt, wird hierbei pulsierend und drückt die im Messrohr befindliche Luft hinaus bzw. saugt die Luft ein. Ueberdruck kommt jedoch nie zustande, da das Messrohr mit Schlauch durch den Stutzen 23, die Kammer 21 und das Zentralloch 33 der Membran in unmittelbarer Verbindung mit der Aussenluft steht. In Fig. 1b wird dies mit dem Pfeil 53 gezeigt.Ueberdruck zufolge Temperatursteigerung wird in der gleichen Weise verhindert. Der Pfeil 55 in Fig. 1b zeigt, wie die Druckkammer 30 des Anzeigegerätes auf ähnliche Weise mit der Aussenluft durch die Kanäle 27 und 26 und die Ringspalte 24, die Kammer 21 und das Loch 33 in Verbindung steht. Wenn der Motor im Gang ist, ist das ganze Anzeigesystem unwirksam, und eine Flüssigkeitssäule im Rohr 41 gibt es nicht.

Wenn der Oelstand festgestellt werden soll, z.B. in Verbindung mit Kraftstoffüllen, wird der Motor stillgesetzt. Der Fahrer drückt mit einem Finger gegen die Membrane 22. Dadurch wird zuerst das Loch 33 abgedeckt, was die Verbindung zwischen der Aussenluft und dem Rohrsystem 17, 8,10 sowie dem Kanalsystem, das mit der Flüssigkeitskammer 30 des Anzeigegerätes in Verbindung steht, absperrt. Wenn die Membrane anschliessend gemäss dem Pfeil 61 eingedrückt wird, wird die Ringspalte 24 unmittelbar blockiert. Dadurch wird das Anzeigegerät sowohl von der Luftkammer 21 als auch dem Rohrsystem zur Oelwanne ausgeschaltet. Die Membran wird danach von dem Finger weiter gegen den Boden 19 der Luftkammer 21 hineingedrückt. Dabei wird die in der Kammer 21 befindliche Luft verdrängt und strömt durch den Stutzen 23 in den Schlauch 17 hinein und weiter in das Messrohr 8 hinab. Dadurch wird das Oel, das im Rohr 8,10 eventuell steht, verdrängt. Der Oelspiegel 52 wird bis nach der unteren Kante 9 des Rohres 10 hinabgepresst, von wo die Luft als Blasen durch das Oel im Kurbelgehäuse aufsteigt. Wegen der kleinen Abmessungen des Rohrsystems reicht das Luftvolumen 21 trotz seiner verhältnismässig kleinen Grösse für ein wirksames Spülen des ganzen Rohrsystems aus. Während dieses ganzen Spülverlaufs ist das Flüssigkeitsgerät 30 mit seinem inneren Kanalsystem durch die Blockierung der Ringspalte 24 ganz ausgeschaltet und wird dadurch gegen Druckstösse geschont, was eine fehlerhafte Anzeige verhindert.

Dadurch, dass die Membrane 22 nur am Umfangsteil elastisch nachgibt, wird lediglich dieser äussere Teil verformt, während der zentrale Abschnitt flach gegen den Kammerboden 19 hineingedrückt wird. Eine Einwirkung von etwa unterschiedlicher Fingergrösse etc. wird dadurch ausgeschaltet. Das Ventil 31 wird an seinem Vorsprung 39 von der Membrane betätigt, unmittelbar ehe die letztere gegen den Kammerboden 19 zum Aufliegen gelangt. Das Ventil 31 öffnet dadurch, und eine Verbindung kommt zwischen der Kammer 30, Kanal 27, Ventilöffnung, Verbindungsnut 37 und dem System 23,18,8,10 zustande. Oel ausserhalb des Rohres 10 wird hierbei durch das Rohr aufwärts gepresst. Die in diesem System befindliche Luft wird etwas verdichtet und überträgt dabei den Oeldruck im Kurbelgehäuse zu der Flüssigkeitskammer 30. Die Anzeigeflüssigkeit 45 sinkt ab, und gleichzeitig steigt die Flüssigkeit im Anzeigerohr 41. Die Höhe der Flüssigkeitssäule ist direkt proportional zum Oelstand im Kurbelgehäuse. Mit geeigneter Gradierung gibt es die Möglichkeit, direkt und schnell ohne besondere Massnahmen den Oelstand im Kurbelgehäuse abzulesen.

Nach der Ablesung wird die Membran freigelassen und kehrt unmittelbar in ihre flache Grundform zurück. Dabei schliesst zuerst das Ventil 31. Das Anzeigegerät ist nunmehr wieder abgesperrt, aber der Flüssigkeitsstand kann noch abgelesen werden. Atmosphärische Luft
strömt bei der Rückbewegung der Membran durch die Oeffnung
33 hindurch, was Unterdruck im Rohrsystem 10,8,17,23 verhindert. Es ist nicht erwünscht, dass Oel in das System
eingesogen wird, und daher ist das zusätzliche Ventil 38
im Kammerboden 19 eingebaut. Dieses Ventil verhindert,
dass Ueberdruck von der Kammer 21 während der Drucksteigerung entweicht, aber lässt, falls erforderlich,
Luft während der Rückkehr der Membran 22 zur Ausgangslage
einströmen. Kurz vor Erreichung dieser Lage wird die Spalte
24 geöffnet. Dabei wird das Anzeigegerät auf Null gebracht,
und die ganze Vorrichtung geht zum neutralen Zustand zurück,
wie in Fig. 1a und 1b dargestellt. Dann ist das Messgerät,
wie früher, sowohl für Temperatur- als auch Druckschwankungen unempfindlich.

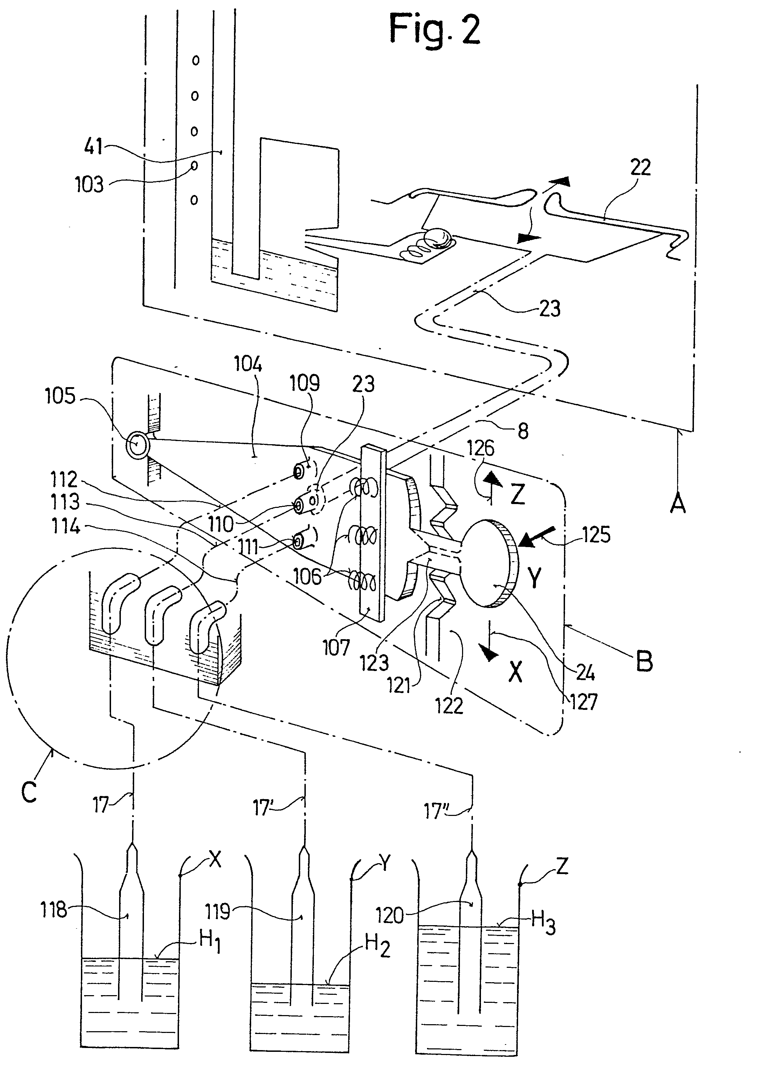

In Fig. 2 ist das in Fig. 1b dargestellte
Anzeigegerät äusserst vereinfacht gezeigt und mit A bezeichnet. Das Anzeigegerät A besitzt eine Pumpenmembran 22
und ein Anzeigerohr 41 mit einer Gradierung 103 und ist
mit einer eingebauten Wählereinrichtung B gemäss der
Erfindung versehen zum wahlweisen Anzeigen des Flüssigkeitsstandes $H_1$, $H_2$, $H_3$ von je einem Flüssigkeitsvolumen
X,Y bzw. Z, welche z.B. im Kurbelgehäuse, im Automatgetriebekasten und im Hydraulölbehälter eines Kraftwagens mit
Verbrennungsmotor, Automatgetriebe und Hydraulfederung
enthalten sind.

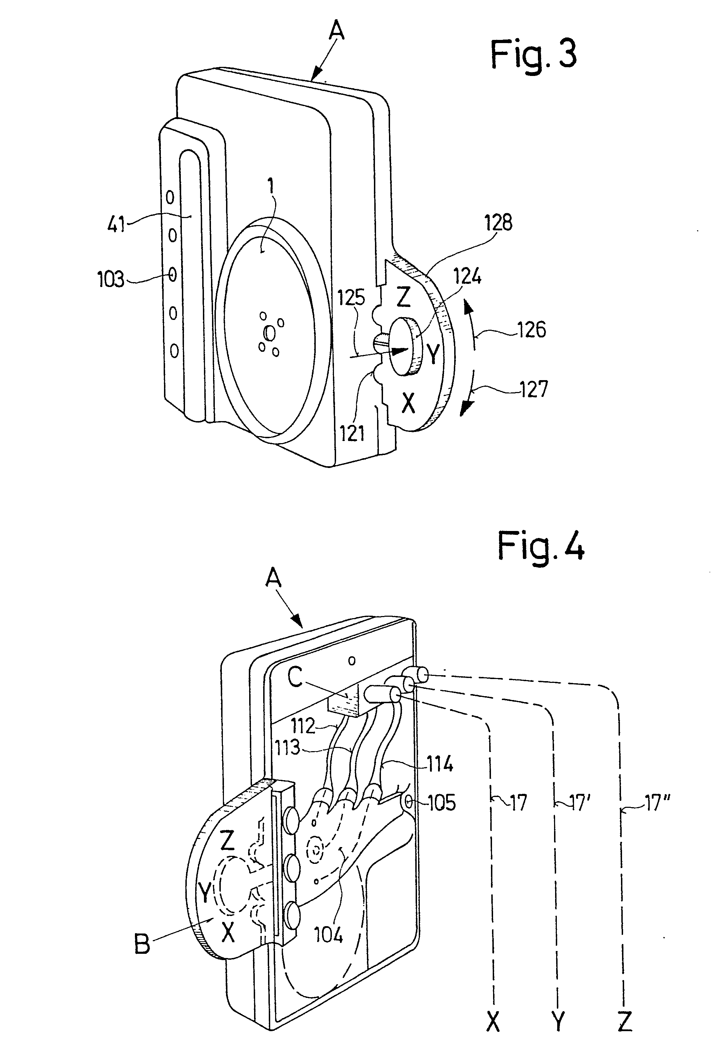

Die Wählereinrichtung B weist ein Schaltglied in der Form eines Wählerarmes 104 auf, der am einen
Ende um einen Zapfen 105 an der Hinterseite des Anzeigegerätes A schwenkbar gelagert ist (Fig. 4). Ein Druckglied 107, mittels Federn 106 belastet, drückt den Wählarm 104 gegen den Stutzen 23. (Der in Fig. 1 dargestellte
Schlauch 17 ist hier also nicht unmittelbar am Stutzen 23
angeschlossen) Der Stutzen 23 kann hierbei gegen die Aussenluft dichtende Verbindung wahlweise mit je einem von drei am Wählerarm vorgesehenen Schlauchanschlüssen 109,110,111 erhalten, in Abhängigkeit von der eingestellten Lage des Wählerarmes. Die Schlauchanschlüsse 109,110,111 sind mittels biegsamer kurzer Schläuche 112,113,114 mit einem am Anzeigegerät vorgesehenen Schaltstück C verbunden, von welchem stärkere Schläuche 17,17' bzw. 17",in den Figuren mittels gestrichelter Linien angedeutet, nach Messrohren 118,119,120 führen, die in die Flüssigkeitsvolumen X,Y und Z eingetaucht sind und in diesen Volumen eine bestimmte Lage einnehmen, derart, dass ihre unteren Enden tiefer als der niedrigste im Betrieb jeweils gestattete Flüssigkeitsstand hinabreichen.

Zum genauen Einstellen des Wählerarmes 104 in je eine der bestimmten Lagen dienen drei in der Seitenwand 122 des Gerätegehäuses geformte Rasten 121, welche den entsprechend ausgebildeten, den Arm verlängernden Stiel 123 aufnehmen können, wobei das federbelastete Druckglied 107 eine dichtende Kupplung zwischen dem Stutzen 23 und dem entsprechenden Anschluss 109,110 bzw. 111 sichert, gemäss Fig. 2 dem Anschluss 110, der mittels des Schlauches 113, des Schaltstückes C, des Schlauches 17' und des Messrohres 119 mit dem Flüssigkeitsvolumen Y in Verbindung steht. Der Wählerarm 104 wird mit der Hilfe eines Griffes 124 am Ende des Stieles 123 betätigt. Beim Umschalten des Wählerarmes wird der Griff gemäss dem Pfeile 125 einwärts gedrückt (Fig. 2 und 3), wodurch der Stiel 123 von der Rast 121 frei wird, wonach der Arm von der in den Figuren angenommenen Mittellage "Y" entweder aufwärts in die Lage "Z" oder abwärts in die Lage "X" gemäss den Pfeilen 126 bzw. 127 geschwenkt werden kann. Falls die Umstellung nach "X" erfolgt, wird der Anschluss 109 mit dem Stutzen 23 gekoppelt, während Umstellung nach "Z" Verbindung zwischen dem Anschluss 11 und dem Stutzen 23 erstellt. Hierdurch wird das Anzeigegerät A in Verbindung mit dem Flüssigkeitsvolumen X bzw. Z über die oben beschriebenen Schlauchsysteme gesetzt.

Von den zahnartigen Vorsprüngen zwischen den Rasten 121 wird der Wählerarm 104 beim Umschalten von der Mündung des Stutzens 23 etwas nach aussen weggeschoben, und die Dichtungsglieder am Stutzen, die von jeder geeigneten bekannten Art sein können, werden daher gegen Reibung und Verschleiss geschont, wodurch eine tadellose Dichtung während langer Zeit aufrechterhalten wird.

Fig. 3 und 4 stellen eine baulich geeignete Ausführungsform des Anzeigegerätes mit erfindungsgemässer Wählereinrichtung für drei Flüssigkeitsvolumen X, Y und Z dar. Die Anzahl der Wahlmöglichkeiten kann zwei, drei oder mehreren Flüssigkeitsvolumen angepasst werden. Die Rückwand des Anzeigegerätes ist mit einem seitlich herausragenden Teil 128 vorgesehen, der mit den Bezeichnungen "X", "Y", "Z" versehen ist. Entsprechend den drei Flüssigkeitsvolumen X,Y bzw. Z (Fig. 4) stellt die Anordnung des Wählerarmes 104 und der drei schmalen Schläuche 112,113, 114 zwischen dem Arm 104 und dem Schaltstück C dar, von welchem die Schläuche 17,17' bzw. 17" nach den Flüssigkeits-X, Y bzw. Z führen.

Das Schaltglied kann anstatt aus einem schwenkbar gelagerten Arm aus einem Schieber bestehen, der während der Einstellbewegungen mittels mechanischer Mittel ausser Eingriff mit dem Stutzen gebracht wird.

Die Wählereinrichtung gemäss der Erfindung kann mit anderen Anzeigevorrichtungen als mit der als Beispiel dargestellten und beschriebenen Vorrichtung zusammenwirken.

Patentansprüche
----------------------------------

1. Wählereinrichtung zum Anzeigen des Standes eines jeden von zwei oder mehreren Flüssigkeitsvolumen mit Hilfe eines gemeinsamen Anzeigegerätes, das über eine Luftpassage mit der Wählereinrichtung verbunden ist, die ihrerseits durch Leitungen in Verbindung mit den Flüssigkeitsvolumen steht, wobei der jeweilige Flüssigkeitsstand dadurch angezeigt wird, dass Luft in der Leitung zwischen dem Anzeigegerät und dem entsprechenden Flüssigkeitsvolumen durch Betätigen eines Verdrängungsgliedes die Flüssigkeit aus dem Tauchrohr am unteren Ende der Leitung hinaustreibt, wonach der von der Flüssigkeit ausserhalb des Rohres ausgeübte Druck in Verbindung mit einer Kammer im Anzeigegerät, die eine Anzeigeflüssigkeit enthält, in Verbindung gesetzt wird und diese Flüssigkeit in ein Anzeigerohr zu einem dem jeweiligen Flüssigkeitsstand entsprechenden Niveau hochdrückt, dadurch gekennzeichnet, dass zum Verbinden einer ausgewählten der Leitungen (17) von den Flüssigkeitsvolumen (x,y,z) mit der Luftpassage (23) ein Schalt- glied (104) an der Wählereinrichtung (b) vorgesehen ist, dessen Bewegung von und zu den Einschaltlagen derart geführt ist, dass das Schaltglied nahe der Einschaltlage eine axiale Bewegung relativ zur Luftpassage (23) erhält und in der Einschaltlage eine von Rasten (121) und Federbelastung bestimmte dichtende Verbindung mit der Luftpassage (23) herstellt.

2. Einrichtung nach Anspruch 1, dadurch gekennzeichnet, dass das Schaltglied (104) schwenkbar gelagert ist und dass seine axiale Bewegung zwischen den Einstellagen von Vorsprüngen gesteuert wird, die die Einstelllagen bestimmende Rasten (121) trennen.

3. Einrichtung nach Anspruch 2, dadurch gekennzeichnet, dass mittels schmaler, biegsamer Schläuche (112,113,114) Durchgangsöffnungen im Schaltglied (104), die mit der Luftpassage (23) zum Decken gebracht werden können, mit einem Schaltstück (C) verbunden werden, das seinerseits durch die Leitungen (17) mit den Flüssigkeitsvolumen (X,Y,Z) verbunden ist.

4. Einrichtung nach einem der Ansprüche 1 bis 3, dadurch gekennzeichnet, dass das Schaltglied (104) aus einem am einen Ende schwenkbar gelagerten flachen Arm besteht, dessen anderes Ende einen Stiel (123) trägt, der in einen Griff (104) übergeht, wobei der Stiel zwecks Eingriff mit den V-förmigen Rasten (121) entsprechend V-förmig ausgebildet ist und unter Federbelastung steht.

5. Einrichtung nach einem der Ansprüche 1 bis 4, dadurch gekennzeichnet, dass das Schaltglied (104) an der Rückseite des Anzeigegerätes (A) schwenkbar gelagert ist und dass sein Griff (124) seitlich vom Geräte (A) vorspringt, wobei die Rasten (121) in einer Seitenwand des Gerätes ausgebildet sind.

**Fig.1a**

**Fig.1b**

0060908

# Fig. 2

Fig. 3

Fig. 4

| | | |
|---|---|---|
| Europäisches Patentamt | **EUROPÄISCHER RECHERCHENBERICHT** | **0060908** Nummer der Anmeldung<br>**EP 81 10 2151** |

| | EINSCHLÄGIGE DOKUMENTE | | KLASSIFIKATION DER ANMELDUNG (Int. Cl.³) |
|---|---|---|---|
| **Kategorie** | Kennzeichnung des Dokuments mit Angabe, soweit erforderlich, der maßgeblichen Teile | betrifft Anspruch | |
| A | FR - A - 2 331 003 (S.L. ANDERSON)<br>  * Abbildungen *<br><br>-- | 1 | G 01 F 23/16 |
| | FR - A - 2 368 020 (R.C. MARTIN)<br>  * Seite 2, Zeilen 20-22; Seite 4, Zeilen 11-18 *<br><br>-- | 1 | |
| | US - A - 3 527 252 (G.R. COOK et al.)<br>  * Figuren 1-8 *<br><br>-- | 1,3,5 | **RECHERCHIERTE SACHGEBIETE (Int. Cl.³)** |
| | GB - A - 123 729 (R.E. BADIN)<br>  * Figur 2; Seite 2, Zeilen 24-28 *<br><br>-- | 1 | G 01 F 23/16<br>        17/00<br>F 16 K 16/00<br>        16/02 |
| | DE - C - 384 464 (L. GUICHARD)<br>  * Abbildungen 3,4; Seite 3, Zeilen 8-20 *<br><br>---- | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-11-1981 | NUYTEN |

EPA form 1503.1   06.78